# FASCICULE DE BREVET EUROPEEN

(11) **EP 4 157 479 B1**
(45) Date de publication et mention de la délivrance du brevet: **03.07.2024**
(21) Numéro de dépôt: 20739739.9
(22) Date de dépôt: 27.05.2020
(51) Int. Cl.: B01D 29/41, B01D 29/64, B01D 29/78, B01D 29/94, B01D 29/96, B01D 35/12

(54) **FILTRE ROTATIF ET PROCEDE DE FILTRATION ASSOCIE**
ROTATIONSFILTER UND ZUGEHÖRIGES FILTERVERFAHREN
ROTARY FILTER AND ASSOCIATED FILTERING METHOD

(43) Date de publication de la demande: 05.04.2023
(73) Titulaire: Gaudfrin, 78100 Saint-Germain-en-Laye (FR)
(72) Inventeur: ILLOUZ, Simon, 78100 SAINT GERMAIN EN LAYE (FR); DAGALLIER, Adrien, 78100 SAINT GERMAIN EN LAYE (FR); GALLAIS, Romain, 78100 SAINT GERMAIN EN LAYE (FR)
(74) Mandataire: Novagraaf Technologies
(86) Numéro de dépôt international: PCT/FR2020/000177
(87) Numéro de publication internationale: WO 2021/240073

(56) Documents cités:
- EP-A1- 0 629 426
- DE-A1- 3 814 373
- FR-A1- 2 779 973

## Description

La présente invention concerne un filtre rotatif et son procédé de filtration associé, en particulier du type utilisé dans une installation industrielle de séparation liquide/solide sous vide ou sous pression. Ce type de filtre est couramment utilisé pour la filtration d'un liquide chargé de particules solides, dit suspension, résultant, par exemple, du traitement d'un minerai, d'une cristallisation, etc.

Dans de nombreuses industries, la séparation des particules solides de la suspension est effectuée par filtration, de préférence aux techniques de décantation qui nécessitent des installations volumineuses et des temps de décantation excessifs, ou de préférence aux techniques de centrifugation qui n'atteignent pas le degré de séparation recherché et qui sont rendues onéreuses par l'énergie et l'entretien nécessaires.

Le principe de base de la filtration consiste à pousser la suspension à travers un média filtrant dont la porosité permet le passage du liquide mais empêche celui des particules solides. Le liquide résultant de la filtration est communément appelé "filtrat". Au cours de l'écoulement du filtrat à travers le média filtrant, une couche de particules solides s'accumule à la surface de ce dernier. Cette couche de particules solides, communément appelée "gâteau", en croissant, offre une résistance de plus en plus élevée au passage de la phase liquide. Il peut donc être parfois nécessaire d'éliminer ce gâteau lorsqu'il est le moins épais possible. L'élimination du gâteau s'effectue par une opération dite de débâtissage. Dans le cas de gâteaux minces, un débâtissage efficace consiste à balayer les gâteaux par aspersion avec un fluide. Ce mode de débâtissage est appelé "dérochage".

Dans le cas d'un filtre rotatif à disque par exemple, le filtre comporte une cuve, dite auge, contenant la suspension à filtrer et un arbre principal horizontal doté d'au moins deux conduites et d'au moins un disque comprenant au moins deux secteurs filtrants indépendants garnis d'un média filtrant chacun, régulièrement répartis autour de l'arbre. L'intérieur de chaque secteur filtrant est en communication avec une conduite. Le disque est immergé en partie dans la suspension, afin que les secteurs filtrants baignent dans ladite suspension au cours d'une partie de leur trajet lors de la rotation de l'arbre.

Dans le cas d'un filtre rotatif à disque fonctionnant sous pression, les disques sont placés dans une enceinte sous pression, ce qui tend à pousser la suspension à travers les médias filtrants, vers les conduites. Des gâteaux de filtration se forment sur le média des secteurs filtrants. Lorsque les secteurs filtrants, lors de leur trajet, émergent de la suspension, lesdits gâteaux de filtration subissent un essorage, ce qui facilite ensuite leur débâtissage.

Actuellement, pour effectuer ledit débâtissage par dérochage, il est nécessaire de vider au préalable l'auge contenant la suspension. Le dérochage induit donc un temps mort qui est d'autant plus pénalisant pour le rendement du filtre que les temps de formation des gâteaux minces sont courts.

Document EP0629426 A1 décrit un filtre à disques rotatif pour séparer des particules solides d'un liquide chargé.

La présente invention a pour but de proposer un filtre rotatif et un procédé de filtration associé qui permettent de travailler avec des gâteaux minces en les débâtissant par dérochage sans devoir vider l'auge contenant la suspension, garantissant ainsi un rendement de filtration maximal.

Ce but est atteint selon l'invention au moyen d'un filtre rotatif prévu pour la séparation liquide/solide d'une suspension, comportant une auge contenant la suspension, un dispositif d'aspersion de fluide de dérochage et au moins un disque solidaire en rotation d'un arbre principal, chaque disque étant immergé en partie dans la suspension et chaque disque comportant plusieurs secteurs filtrants, chaque secteur filtrant comprenant un élément de structure recouvert d'un média filtrant et un conduit pour le raccordement dudit secteur à une conduite aménagée le long de l'arbre principal, caractérisé en ce que :
- chaque disque comporte une première série d'au moins un secteur filtrant qui est séparée d'une seconde série d'au moins un secteur filtrant par deux zones non-filtrantes,
- l'arbre principal comporte une première conduite qui communique avec la première série d'au moins un secteur filtrant de chaque disque et une seconde conduite qui communique avec la seconde série d'au moins un secteur filtrant de chaque disque,
- ledit filtre rotatif comporte des dents de peigne agencées au-dessus du niveau de la suspension, de part et d'autre de chaque disque,
- l'arbre principal est prévu pour occuper au moins :
   -- une première position angulaire dans laquelle la première série d'au moins un secteur filtrant de chaque disque se trouve sous les dents de peigne, baignant dans la suspension à filtrer, et dans laquelle la seconde série d'au moins un secteur filtrant de chaque disque se trouve au-dessus des dents de peigne, chaque zone non-filtrante étant adjacente à une dent de peigne sur chacune de ses faces,
   -- une seconde position angulaire dans laquelle la seconde série d'au moins un secteur filtrant de chaque disque se trouve sous les dents de peigne, baignant dans la suspension à filtrer, et dans laquelle la première série d'au moins un secteur filtrant de chaque disque se trouve au-dessus des dents de peigne, chaque zone non-filtrante étant adjacente à une dent de peigne sur chacune de ses faces,
de manière à permettre le dérochage de la série d'au moins un secteur filtrant de chaque disque située au-dessus des dents de peigne pendant que la filtration de la suspension continue sur l'autre série d'au moins un secteur filtrant de chaque disque située sous les dents de peigne.

Selon d'autres caractéristiques avantageuses de l'invention :
- le filtre rotatif comporte au moins un joint d'étanchéité agencé entre chaque zone non-filtrante et la dent de peigne adjacente, lorsque l'arbre principal occupe la première position angulaire et lorsque l'arbre principal occupe la seconde position angulaire ;
- chaque joint d'étanchéité comporte une partie escamotable qui est commandée entre un état déployé dans lequel elle établit un contact étanche entre la zone non-filtrante et la dent de peigne adjacente, et un état escamoté dans lequel il n'y a plus de contact étanche entre la zone non-filtrante et la dent de peigne adjacente ;
- chaque joint d'étanchéité comporte au moins une partie déformable élastiquement ;
- chaque joint d'étanchéité est agencé sur la zone non-filtrante ;
- chaque zone non-filtrante comporte un secteur de disque, dit secteur non-filtrant, interposé entre un secteur filtrant de la première série et un secteur filtrant de la seconde série ;
- chaque secteur non-filtrant comporte au moins une conduite d'arrivée de fluide sous pression qui est raccordée à un canal d'alimentation aménagé le long de l'arbre principal de manière à permettre le déploiement de chaque joint d'étanchéité par gonflement et l'escamotage de chaque joint d'étanchéité par dégonflement ;
- chaque joint d'étanchéité est une membrane qui est fixée sur un secteur non-filtrant par ses bords périphériques et qui comporte une paroi principale mobile qui est reliée aux bords périphériques par une portion de liaison en forme de soufflet ;
- les dents de peigne sont fixées sur les bords de l'auge ;
- chaque dent de peigne est inclinée vers le bas depuis l'arbre principal vers l'extérieur, de manière à faciliter l'écoulement vers l'extérieur de l'auge des boues constituées par le mélange du fluide utilisé pendant le dérochage et des gâteaux de filtration débâtis des secteurs filtrants ;
- l'arbre principal est équipé d'une première vanne aval permettant de fermer la première conduite lorsque la première série d'au moins un secteur filtrant de chaque disque subit une opération de dérochage, et d'une seconde vanne aval permettant de fermer la seconde conduite lorsque la seconde série d'au moins un secteur filtrant de chaque disque subit une opération de dérochage ;
- le filtre rotatif comporte plusieurs disques ;
- l'auge est agencée à l'intérieur d'une cuve qui comporte une trémie agencée sous l'auge pour récupérer les boues issues du dérochage ;
- le dispositif d'aspersion pour le dérochage comporte une chambre supérieure munie d'au moins un orifice d'alimentation en fluide de dérochage et comporte une série de perçages positionnée au-dessus du ou des disques de manière que la mise sous pression du fluide de dérochage dans la chambre supérieure provoque des jets de dérochage vers les faces principales des secteurs filtrants.

L'invention propose aussi un procédé de filtration pour la séparation liquide/solide d'une suspension au moyen d'un filtre rotatif comportant une auge contenant la suspension, un dispositif d'aspersion de fluide de dérochage et au moins un disque solidaire en rotation d'un arbre principal, chaque disque étant immergé en partie dans la suspension et chaque disque comportant plusieurs secteurs filtrants, chaque secteur filtrant comprenant un élément de structure recouvert d'un média filtrant et un conduit pour son raccordement à une conduite aménagée le long de l'arbre principal, le procédé comportant les opérations suivantes :
a) filtration de la suspension sur chaque disque au moyen d'une première ou d'une seconde série d'au moins un secteur filtrant,
b) dérochage sur chaque disque d'une première ou d'une seconde série d'au moins un secteur filtrant par aspersion avec un fluide de dérochage,
le procédé étant caractérisé en ce qu'il comprend un cycle de fonctionnement nominal au cours duquel :
- l'opération de filtration de la première série d'au moins un secteur filtrant de chaque disque est réalisée simultanément avec l'opération de dérochage de la seconde série d'au moins un secteur filtrant de chaque disque, l'arbre principal étant commandé dans une première position angulaire où la première série d'au moins un secteur filtrant de chaque disque baigne dans la suspension et où la seconde série d'au moins un secteur filtrant de chaque disque est agencée au-dessus de la suspension, et
- l'opération de filtration de la seconde série d'au moins un secteur filtrant de chaque disque est réalisée simultanément avec l'opération de dérochage de la première série d'au moins un secteur filtrant de chaque disque, l'arbre principal étant commandé dans une seconde position angulaire où la seconde série d'au moins un secteur filtrant de chaque disque baigne dans la suspension et où la première série d'au moins un secteur filtrant de chaque disque est agencée au-dessus de la suspension.

Selon d'autres caractéristiques avantageuses du procédé :
- l'arbre principal comporte une première conduite qui communique avec la première série d'au moins un secteur filtrant de chaque disque et une seconde conduite, distincte de la première conduite, qui communique avec la seconde série d'au moins un secteur filtrant de chaque disque, et, pendant l'opération de dérochage de la première série d'au moins un secteur filtrant de chaque disque, la première conduite est fermée, et pendant l'opération de dérochage de la seconde série d'au moins un secteur filtrant de chaque disque, la seconde conduite est fermée ;
- chaque opération de dérochage est précédée par une étape de mise en étanchéité au cours de laquelle un contact étanche est établi entre chaque disque et des dents de peigne, et chaque opération de dérochage est suivie par une étape de suppression de l'étanchéité au cours de laquelle le contact étanche est supprimé ;
- l'étape de mise en étanchéité consiste à commander les parties escamotables de joints d'étanchéité dans un état déployé où elles assurent le contact étanche, et l'étape de suppression de l'étanchéité consiste à commander lesdites parties escamotables dans un état escamoté où elles assurent la suppression dudit contact étanche ;
- les joints d'étanchéité sont déployés par gonflement résultant de la mise en pression d'un circuit de fluide alimentant au moins deux secteurs non-filtrants par disque agencés entre les deux séries d'au moins un secteur filtrant de chaque disque, à travers un canal d'alimentation aménagé le long de l'arbre principal, et lesdits joints d'étanchéité sont escamotés par dégonflement résultant de la baisse de pression dudit circuit de fluide ;
- au cours du cycle nominal, l'arbre principal est commandé alternativement en pivotement de 180 degrés dans le sens horaire puis anti-horaire entre la première position angulaire et la seconde position angulaire ;
- les boues issues des opérations de dérochage sont réinjectées en partie dans le circuit d'alimentation du dispositif d'aspersion des disques au cours des opérations de dérochage.

D'autres avantages pourront encore apparaître à l'homme du métier à la lecture des exemples ci-dessous, illustrés par les figures annexées suivantes :
- la figure 1 est une vue en perspective et en coupe longitudinale suivant le plan I-I de la figure 2, qui représente un filtre rotatif selon l'invention ;
- la figure 2 est une vue en coupe transversale selon le plan II-II, qui représente le filtre rotatif de la figure 1 ;
- la figure 3 est une vue en coupe longitudinale selon le plan III-III, qui illustre le déploiement des joints d'étanchéité, ici le gonflement de membranes, qui équipent les secteurs non-filtrants du filtre rotatif de la figure 1 ;
- la figure 4 est une vue en perspective et en coupe qui représente une portion du filtre rotatif de la figure 1 ;
- la figure 5 est une vue en perspective qui représente un secteur non-filtrant du filtre rotatif de la figure 1 équipé de membranes ;
- la figure 6 est une vue en coupe selon le plan IV-IV de la figure 5 qui représente le secteur non-filtrant du filtre rotatif lorsque les membranes sont dégonflées ;
- la figure 7 est une vue en coupe selon le plan IV-IV de la figure 5 qui représente le secteur non-filtrant du filtre rotatif lorsque les membranes sont gonflées ;
- la figure 8 est une vue schématique qui illustre une première étape du procédé de filtration selon l'invention, où l'arbre principal du filtre rotatif occupe une première position angulaire, et au cours de laquelle simultanément, la filtration commence sur une première série de secteurs filtrants de chaque disque, l'essorage des gâteaux a lieu sur une seconde série de secteurs filtrants de chaque disque, et les membranes sont gonflées sur les secteurs non-filtrants ;
- la figure 9 est une vue schématique qui illustre une deuxième étape du procédé de filtration selon l'invention, où l'arbre principal du filtre rotatif reste dans la même position angulaire, et au cours de laquelle simultanément, la filtration continue sur les premières séries de secteurs filtrants, une opération de dérochage a lieu sur les secondes séries de secteurs filtrants, et les membranes sont commandées dans l'état gonflé sur les secteurs non-filtrants ;
- la figure 10 est une vue schématique qui illustre une troisième étape du procédé de filtration selon l'invention, où l'arbre principal du filtre rotatif reste dans la même position angulaire, et au cours de laquelle simultanément, la filtration continue sur les premières séries de secteurs filtrants et les membranes sont dégonflées sur les secteurs non-filtrants ;
- la figure 11 est une vue schématique qui illustre une quatrième étape du procédé de filtration selon l'invention, au cours de laquelle l'arbre principal pivote vers une seconde position angulaire ;
- la figure 12 est une vue en coupe longitudinale selon le plan III-III qui illustre la mise en étanchéité par gonflement des membranes, lors de la première étape illustrée par la figure 8 ;
- la figure 13 est une vue en coupe longitudinale selon le plan III-III qui illustre l'état gonflé des membranes, lors de la deuxième étape illustrée par la figure 9 ;
- la figure 14 est une vue en coupe longitudinale selon le plan III-III qui illustre la suppression de l'étanchéité par dégonflement des membranes, lors de la troisième étape illustrée par la figure 10 ;
- la figure 15 est une vue en coupe longitudinale selon le plan III-III qui illustre l'état dégonflé des membranes, lors de la quatrième étape illustrée par la figure 11.

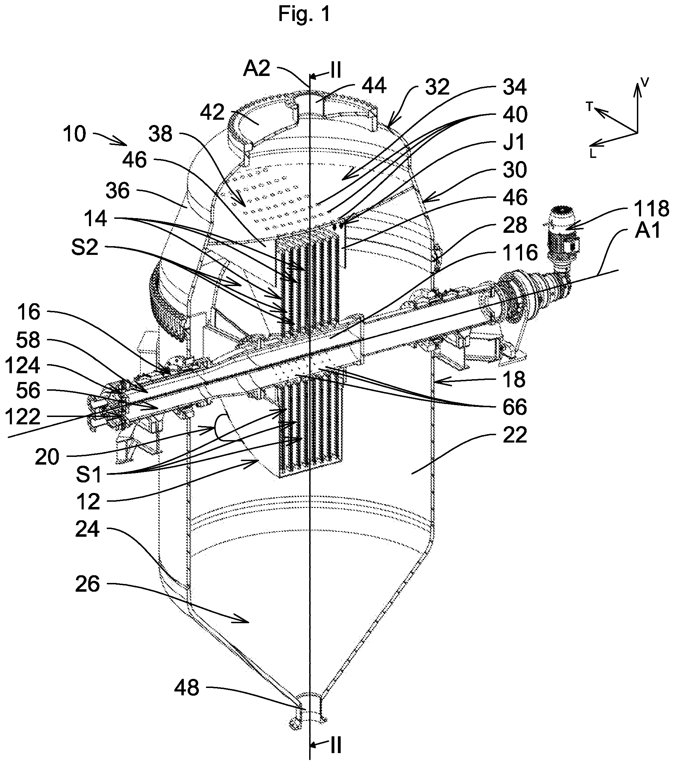

Sur la figure 1, on a représenté un filtre rotatif 10 prévu pour équiper une installation industrielle de séparation liquide/solide d'une suspension.

Dans la suite de la description, on utilisera à titre non limitatif une orientation suivant un repère V, L, T définissant des orientations verticale, longitudinale, et transversale, comme illustré sur la figure 1. Par ailleurs, des éléments identiques ou similaires pourront être désignés par les mêmes chiffres de référence.

Selon le mode de réalisation représenté à la figure 1, le filtre rotatif 10 comporte une auge 12 et plusieurs disques 14 solidaires en rotation d'un arbre principal 16. L'arbre principal 16 est ici monté à rotation autour d'un axe longitudinal A1 qui s'étend suivant une direction longitudinale au travers d'une cuve 18 contenant l'auge 12 et les disques 14.

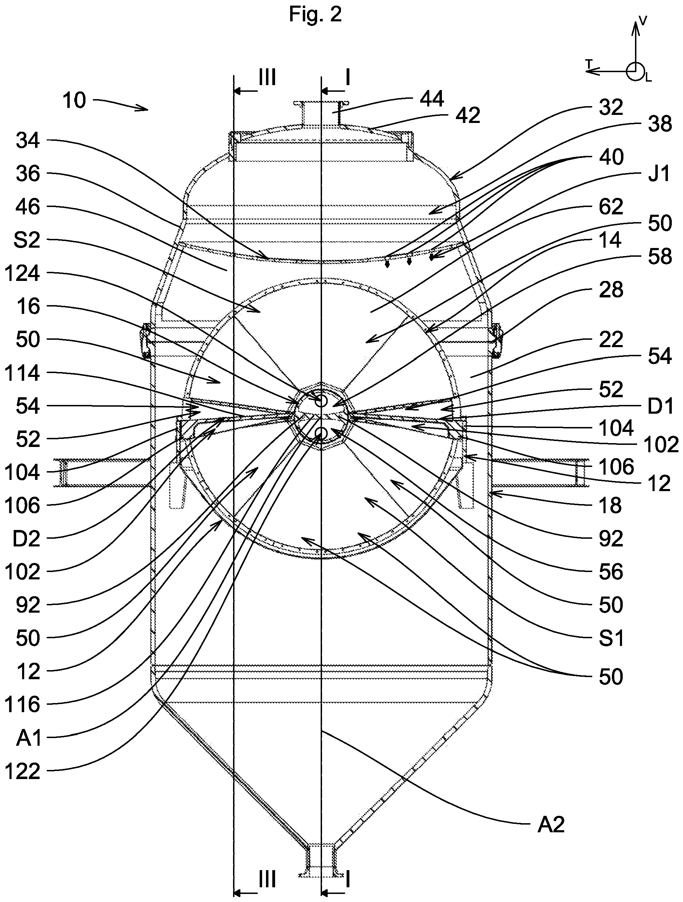

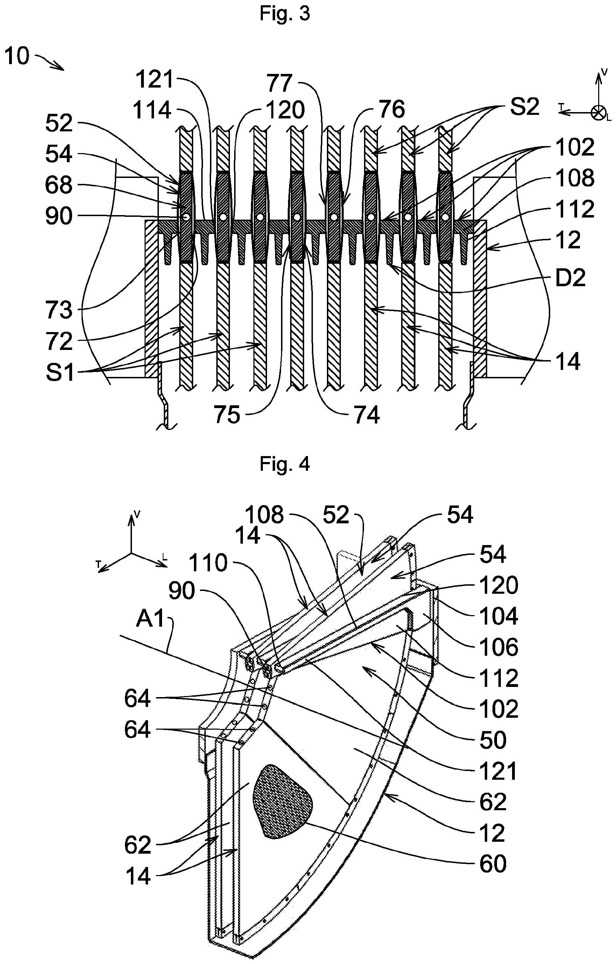

Comme illustré notamment par les figures 2 et 3, l'auge 12 a globalement la forme d'un demi-cylindre, ouvert vers le haut, de diamètre légèrement supérieur au diamètre des disques 14. L'auge 12 est prévue pour être alimentée en suspension, ici par une conduite d'alimentation 20.

L'auge 12 est ici suspendue au milieu de la cuve 18. La cuve 18 comporte, dans ce mode de réalisation, une paroi cylindrique principale 22 d'axe vertical A2, la paroi cylindrique principale 22 se prolongeant, à son extrémité axiale inférieure 24, par une trémie 26 et, à son extrémité axiale supérieure 28, par un couvercle 30 en forme de cloche.

Selon le mode de réalisation représenté, le filtre rotatif 10 est prévu pour fonctionner sous pression, c'est-à-dire que l'enceinte délimitée par la cuve 18 est placée sous une pression supérieure à la pression atmosphérique de manière à forcer le passage du filtrat à travers les disques 14, puis vers l'intérieur de l'arbre principal 16 et enfin vers la sortie de l'arbre principal 16, comme on le verra plus en détail par la suite.

Un dispositif d'aspersion 32 est ici logé dans le couvercle 30 au-dessus des disques 14. Selon l'exemple représenté, le dispositif d'aspersion 32 comporte une calotte sphérique 34 qui est ici soudée à une paroi tronconique 36 du couvercle 30 de manière à délimiter, dans la partie haute de la cuve 18, une chambre supérieure 38 apte à contenir un fluide de dérochage. La calotte sphérique 34 comporte une série de perçages 40 positionnée au-dessus des disques 14 de manière que la mise sous pression du fluide de dérochage dans la chambre supérieure 38 provoque des jets de dérochage J1, à travers les perçages 40, vers les disques 14. Le dispositif d'aspersion 32 fonctionne globalement comme un pommeau de douche.

Avantageusement, le couvercle 30 est muni d'une trappe d'accès 42 qui permet de faciliter le nettoyage et la maintenance du dispositif d'aspersion 32. La trappe d'accès 42 est ici pourvue d'un orifice d'alimentation 44 en fluide de dérochage.

Selon un autre mode de réalisation avantageux, les perçages 40 peuvent être équipés de buses aptes à former des jets de dérochage J1 plats, ou de toute autre forme, orientés vers les faces principales, c'est-à-dire les faces radiales, des disques 14.

Dans la suite de la description, pour des éléments de disque ou des secteurs de disque, on désignera par face principale la face radiale, c'est-à-dire la face qui s'étend dans un plan transversal par rapport à l'axe du disque.

Selon le mode de réalisation représenté, des joues 46, ici en forme de plaques parallèles aux disques 14, sont fixées sur la face inférieure de la calotte sphérique 34, de part et d'autre de l'empilement formé par tous les disques 14 du filtre rotatif 10, de manière à délimiter une zone d'aspersion au-dessus des disques 14.

On note que les joues 46 contribuent également à renforcer la rigidité de la calotte sphérique 34 à la manière de nervures de renforcement.

La trémie 26 se termine, à son extrémité axiale inférieure, par une bonde 48 qui permet l'évacuation des boues résultant d'une opération de dérochage.

Le fluide de dérochage, qui peut aussi être désigné par fluide de nettoyage ou fluide de débâtissage ou fluide de rinçage, est par exemple un mélange d'eau et de boues issues de l'opération de dérochage.

Chaque disque 14 est ici formé d'une première et d'une seconde série S1, S2 de secteurs filtrants 50, les deux séries S1, S2 étant séparées l'une de l'autre par deux zones non-filtrantes 52 qui sont diamétralement opposés. Dans le mode de réalisation représenté, chaque série S1, S2 comporte quatre secteurs filtrants 50 et chaque zone non-filtrante 52 est un secteur non-filtrant 54.

On note que l'invention s'applique aussi à un filtre rotatif 10 dans lequel une série S1, S2 comporte un seul secteur filtrant 50.

La première série S1 de secteurs filtrants 50 est prévue pour communiquer avec une première conduite 56 aménagée dans l'arbre principal 16 et la seconde série S2 de secteurs filtrants 50 est prévue pour communiquer avec une seconde conduite 58 aménagée dans l'arbre principal 16.

Selon le mode de réalisation représenté à la figure 4, chaque secteur filtrant 50 comprend un élément de structure 60 recouvert d'un média filtrant 62, par exemple une toile filtrante, et au moins un conduit 64, ici deux, débouchant dans une des conduites 56, 58 de l'arbre principal 16 par des orifices de raccordement 66 visibles sur la figure 1.

L'élément de structure 60 sert de support et d'appui au média filtrant 62. Le média filtrant 62 délimite un volume intérieur du secteur filtrant 50 dans lequel s'écoule le filtrat.

Avantageusement, comme représenté sur les figures 3 à 7, chaque secteur non-filtrant 54 comporte un corps principal plein 68, en forme de secteur de disque, qui est ici muni de trous traversants 70, et qui comporte sur chacune de ses faces principales 72, 73 un joint d'étanchéité 74, 75. Chaque joint d'étanchéité 74, 75 est ici une membrane 76, 77 déformable élastiquement. Chaque membrane 76, 77 est ici fixée au corps principal plein 68 par ses bords périphériques 78 au moyen de brides de fixation 80. Ainsi, les bords périphériques 78 de chaque membrane 76, 77 sont pincés entre des brides de fixation 80 et le corps principal plein 68.

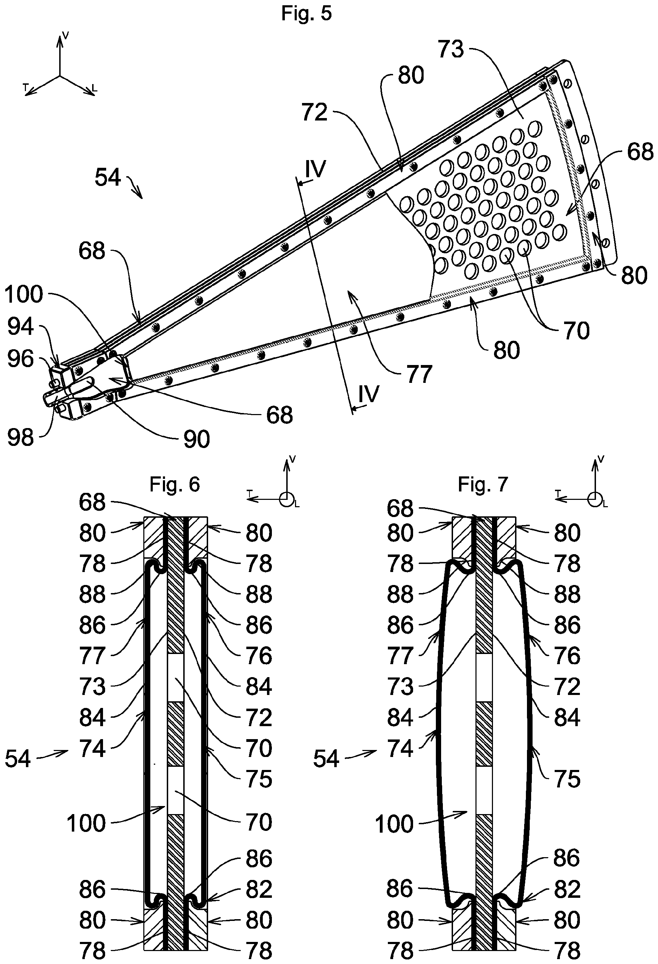

Chaque membrane 76, 77 comporte une partie escamotable 82 constituée d'une paroi principale mobile 84 et d'une portion de liaison 86 en forme de soufflet reliant la paroi principale mobile 84 aux bords périphériques 78. Comme on peut le voir sur la figure 6, la portion de liaison 86 a ici un profil en forme de S. Cette portion de liaison 86 est prévue pour se déployer, comme illustré par la figure 7, et permettre ainsi le déplacement de la paroi principale mobile 84 dans une direction opposée au corps principal plein 68.

Avantageusement, chaque bride de fixation 80 comporte, du côté de la paroi principale mobile 84, un rebord incurvé concave 88 qui est prévu pour épouser la forme de S de la portion de liaison 86.

Les membranes 76, 77 sont ici réalisées principalement dans un matériau du type élastomère ou caoutchouc afin de bénéficier de suffisamment de souplesse pour que la portion de liaison 86 se déforme de manière élastique et puisse ainsi reprendre naturellement sa configuration initiale après déformation.

Avantageusement, le matériau de chaque membrane 76, 77 peut comporter une âme textile ou un autre matériau permettant de maintenir une certaine tension structurelle dans la membrane 76, 77.

Ces membranes 76, 77 sont étanches à la suspension. Elles n'ont pas de fonction filtrante. Elles ont une fonction de joint d'étanchéité comme cela sera expliqué plus en détail par la suite.

Une conduite d'arrivée 90 de fluide sous pression est aménagée dans le corps principal plein 68. La conduite d'arrivée 90 communique avec, comme illustré à la figure 2, un canal 92 d'alimentation en fluide sous pression, par exemple de l'air comprimé, aménagé le long de l'arbre principal 16, ici à l'intérieur, de manière à permettre le gonflement de chaque membrane 76, 77 par mise sous pression. Les membranes 76, 77 forment ainsi des joints d'étanchéité escamotables.

Le corps principal plein 68 est par exemple réalisé en tôle d'acier ou bien dans un autre matériau. Il est ici fixé sur l'arbre principal 16 au moyen d'une embase 94 qui est munie notamment de deux pions 96 et d'une tubulure de raccordement 98 radiale qui communique d'un côté avec le canal 92 d'alimentation en fluide sous pression et de l'autre côté avec la conduite d'arrivée 90 de fluide sous pression.

Les pions 96 assurent un bon positionnement du secteur non-filtrant 54 sur l'arbre principal 16 en empêchant le secteur non-filtrant 54 de pivoter.

A partir de l'état dégonflé des membranes 76, 77 illustré par la figure 6, l'alimentation en fluide sous pression via la conduite d'arrivée 90 provoque une augmentation de la pression à l'intérieur du secteur non-filtrant 54 dans la cavité 100 délimitée par les deux membranes 76, 77, de part et d'autre du corps principal plein 68. L'augmentation de la pression dans la cavité 100 tend à repousser les parois principales mobiles 84 vers l'extérieur du secteur non-filtrant 54 jusqu'à ce que les parois principales mobiles 84 occupent leur état gonflé illustré par la figure 7.

Comme on peut le voir notamment sur les figures 2, 3 et 4, l'auge 12 comporte des dents de peigne 102, agencées au-dessus du niveau de la suspension, de part et d'autre de chaque disque 14. Chaque dent de peigne 102 est ici fixée contre un rebord longitudinal 104 de l'auge 12, par exemple par vissage, et s'étend vers l'arbre principal 16.

Pour assurer une bonne rigidité des dents de peigne 102, chaque dent de peigne 102 comporte un corps principal globalement en forme d'équerre, avec un pied d'appui 106 pour sa fixation contre la face intérieure du rebord longitudinal 104 de l'auge 12, et une baguette 108 qui s'étend depuis l'extrémité supérieure du pied d'appui 106 jusqu'à une extrémité libre 110 proche de l'arbre principal 16. Chaque dent de peigne 102 comporte ici une plaquette de rigidification 112 qui s'étend, sous la baguette 108, jusqu'au pied d'appui 106.

Avantageusement, une première série D1 de dents de peigne 102 est agencée d'un côté de l'arbre principal 16 et une seconde série D2 de dents de peigne 102 est agencée de l'autre côté de l'arbre principal 16.

Ainsi, chaque disque 14 est enserré par quatre dents de peigne 102, deux appartenant à la première série D1 et deux appartenant à la seconde série D2.

Avantageusement, la surface supérieure 114 de la baguette 108 de chaque dent de peigne 102 est inclinée vers le bas depuis l'arbre principal 16, ce qui, comme on le verra par la suite, facilite l'écoulement des boues issues de l'opération de dérochage vers l'extérieur de l'auge 12.

Comme indiqué précédemment, l'arbre principal 16 comporte deux conduites 56, 58 intérieures, ou chambres, qui sont séparées par une paroi de séparation 116 longitudinale. L'arbre principal 16 est prévu pour être entraîné en rotation par un dispositif d'entraînement 118 entre deux positions angulaires P1, P2 extrêmes : une première position angulaire P1, qui est illustrée par les figures 1 à 3, dans laquelle les premières séries S1 de secteurs filtrants 50 baignent dans la suspension, et une seconde position angulaire P2, diamétralement opposée à la première position angulaire P1, dans laquelle les secondes séries S2 de secteurs filtrants 50 baignent dans la suspension.

Dans la première position angulaire P1, tous les secteurs filtrants 50 des premières séries S1 se trouvent dans l'auge 12, sous les dents de peigne 102, alors que tous les secteurs filtrants 50 des secondes séries S2 se trouvent au-dessus de l'auge 12, au-dessus des dents de peigne 102. Les secteurs non-filtrants 54, qui séparent la série S1 de la série S2 de secteurs filtrants 50 de chaque disque 14, se trouvent à hauteur des dents de peigne 102, de manière que le gonflement des membranes 76, 77 provoque un contact étanche entre les membranes 76, 77 et les parois latérales 120, 121 des dents de peigne 102 adjacentes, au niveau des baguettes 108.

Avantageusement, tous les disques 14, ici au nombre de huit, sont positionnés de la même manière dans l'auge 12, par rapport à l'arbre principal 16. Ainsi, dans la première position angulaire P1, tous les disques 14 ont leur première série S1 de secteurs filtrants 50 baignant dans la suspension alors que leur seconde série S2 de secteurs filtrants 50 est positionnée au-dessus des séries D1, D2 de dents de peigne 102.

La seconde position angulaire P2 est symétrique à la première position angulaire P1 par rapport à l'axe longitudinal A1.

Avantageusement, l'arbre principal 16 est équipé d'une première vanne aval 122, ici à son extrémité aval, permettant de fermer la première conduite 56 du côté de l'évacuation du filtrat, et d'une seconde vanne aval 124, ici à son extrémité aval, permettant de fermer la seconde conduite 58 du côté de l'évacuation du filtrat.

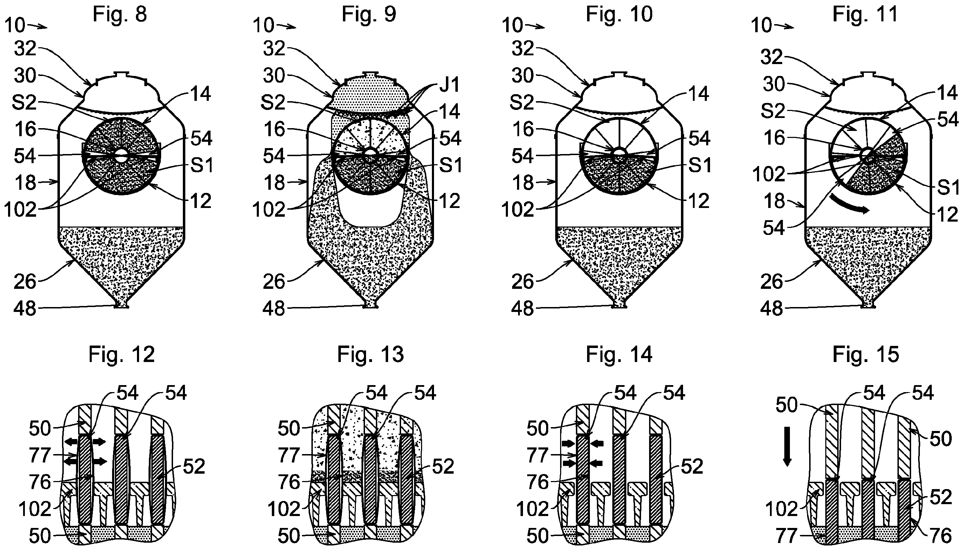

On décrit maintenant le fonctionnement du filtre rotatif 10, notamment en référence aux figures 8 à 15 qui illustrent différentes étapes du procédé de filtration. On note que les figures 12 à 15 illustrent l'état des membranes 76, 77 respectivement au cours des étapes représentées sur les figures 8 à 11.

Le filtre rotatif 10 est alimenté en continu en suspension de manière à garder l'auge 12 remplie.

La figure 8 représente le filtre rotatif 10 après qu'il ait déjà subi plusieurs cycles de fonctionnement, de sorte que les secondes séries S2 de secteurs filtrants 50, positionnées au-dessus des séries D1, D2 de dents de peigne 102, sont déjà recouvertes de gâteau. De plus, la trémie 26 est déjà remplie de boues issues d'étapes précédentes de dérochage.

La figure 8 illustre une première étape du procédé de filtration au cours de laquelle la suspension est filtrée par les premières séries S1 de secteurs filtrants 50 qui sont plongées dans la suspension. Ainsi, sous l'effet de la pression régnant dans la cuve 18, le filtrat passe à travers le média filtrant 62 des secteurs filtrants 50. Le filtrat passe dans la première conduite 56 de l'arbre principal 16 en traversant les orifices de raccordement 66, et est évacué de l'arbre principal 16 en passant par la première vanne aval 122 qui est commandée en position ouverte.

Simultanément, au cours de cette première étape, la seconde vanne aval 124 est commandée en position ouverte. Ceci maintient une différence positive entre la pression de la cuve 18 et la pression de la seconde conduite 58 de l'arbre principal 16, ce qui permet de réaliser une opération d'essorage du gâteau sur les secteurs filtrants 50 des secondes séries S2.

Simultanément, au cours de cette première étape, on met en pression les membranes 76, 77, comme illustré par la figure 12, pour les gonfler, de manière à établir un contact étanche entre les dents de peigne 102 et les secteurs non-filtrants 54.

La figure 9 illustre une seconde étape du procédé au cours de laquelle la suspension continue à être filtrée par les premières séries S1 de secteurs filtrants 50, puisque l'arbre principal 16 occupe toujours sa première position angulaire P1 et puisque la première vanne aval 122 est toujours ouverte.

Simultanément, au cours de cette seconde étape, la seconde vanne aval 124 est commandée en position fermée. Ceci crée un équilibre entre la pression de la cuve 18 et la pression de la seconde conduite 58 de l'arbre principal 16, ce qui permet la réalisation d'une opération de dérochage efficace sur les secteurs filtrants 50 des secondes séries S2 au moyen du dispositif d'aspersion 32 qui projette des jets de dérochage J1 sur les secteurs filtrants 50, et plus particulièrement sur les faces principales des secteurs filtrants 50 des secondes séries S2. Les membranes 76, 77 sont maintenues en état gonflé sur les secteurs non-filtrants 54.

Comme illustré sur la figure 9, l'opération de dérochage produit des boues, c'est-à-dire un mélange de fluide de dérochage et de particules solides issues du gâteau. Ces boues s'écoulent vers le bas, le long des dents de peigne 102, vers la trémie 26.

Comme illustré par la figure 13, l'étanchéité réalisée au préalable par gonflement des membranes 76, 77, évite que les boues pénètrent dans l'auge 12 en passant entre les disques 14 et les dents de peigne 102. Ceci permet donc d'assurer une parfaite efficacité, à la fois de la filtration sur les premières séries S1 de secteurs filtrants 50 dans l'auge 12, et du dérochage sur les secondes séries S2 de secteurs filtrants 50.

La figure 10 illustre une troisième étape du procédé au cours de laquelle la suspension continue à être filtrée par les premières séries S1 de secteurs filtrants 50, puisque l'arbre principal 16 occupe toujours sa première position angulaire P1 et puisque la première vanne aval 122 est toujours ouverte.

Simultanément, au cours de cette troisième étape, le dispositif d'aspersion 32 est arrêté puisque l'opération de dérochage est terminée et les membranes 76, 77 sont dégonflées, comme illustré par la figure 14. L'arbre principal 16 occupe toujours sa première position angulaire P1 et la seconde vanne aval 124 est toujours fermée.

Le dégonflement des membranes 76, 77 permet d'éviter que les membranes 76, 77 ne frottent contre les dents de peigne 102 adjacentes lorsque l'arbre principal 16 sera entraîné en rotation, ce qui risquerait de provoquer une usure prématurée.

La figure 11 illustre une quatrième étape du procédé au cours de laquelle l'arbre principal 16 est entraîné en rotation, ici dans le sens anti-horaire, depuis sa première position angulaire P1 vers sa seconde position angulaire P2. Sur la figure 11, l'arbre principal 16 est représenté dans une position angulaire intermédiaire Pi, entre la première position angulaire P1 et la seconde position angulaire P2.

Au cours de cette quatrième étape, la première vanne aval 122 est maintenue en position ouverte ce qui permet de continuer la filtration dans les secteurs filtrants 50 des premières séries S1, tant que ceux-ci baignent dans la suspension. Comme on peut le voir sur la figure 11, les secteurs filtrants 50 des premières séries S1 qui émergent de la suspension commencent leur étape d'essorage, alors que ceux qui baignent encore dans la suspension continuent à filtrer.

Au cours de cette quatrième étape, la seconde vanne aval 124 est maintenue en position fermée de sorte que les secteurs filtrants 50 des secondes séries S2, entrant progressivement dans l'auge 12, ne commencent pas à filtrer.

Pendant la quatrième étape, les membranes 76, 77 restent dégonflées, comme illustré par la figure 15.

A la fin de la quatrième étape, après 180 degrés de rotation anti-horaire par rapport à la première position angulaire P1, l'arbre principal 16 occupe sa seconde position angulaire P2, avec les secteurs filtrants 50 des premières séries S1 en position haute, au-dessus des séries D1, D2 de dents de peigne 102, alors que les secteurs filtrants 50 des secondes séries S2 baignent dans la suspension.

Ainsi, comme illustré par les figures 8 et 12, après la quatrième étape, une nouvelle première étape commence, mais avec filtration par les secondes séries S2 de secteurs filtrants 50 en bas, et avec essorage par les premières séries S1 de secteurs filtrants 50 en haut.

Un cycle complet de fonctionnement nominal comprend donc les quatre étapes mentionnées précédemment, répétées deux fois de manière que les séries S1 et les séries S2 de secteurs filtrants 50 soient passées à la filtration et au dérochage.

De préférence, à la fin du cycle de fonctionnement nominal, l'arbre principal 16 est entraîné en rotation en sens inverse, ici en sens horaire, de manière à retourner vers sa première position angulaire P1 à partir de la seconde position angulaire P2.

Le pivotement alternatif en sens horaire et anti-horaire permet notamment de ne pas entortiller les câbles de commande des vannes aval 122, 124 qui sont portées par l'arbre principal 16. Cela facilite aussi l'agencement des moyens d'alimentation en fluide sous pression des canaux 92 d'alimentation de l'arbre principal 16.

Avantageusement, une partie des boues issues des étapes de dérochage sont récupérées à la sortie de la trémie 26, puis réinjectées en partie dans le circuit d'alimentation du dispositif d'aspersion 32. Elle constitue ainsi une partie du fluide de dérochage. Sa recirculation permet de réduire la consommation d'autres fluides pour le dérochage et de minimiser le volume des boues produites quel que soit le temps de formation du gâteau.

Le filtre rotatif 10, et le procédé de filtration selon l'invention, est particulièrement adapté à des installations industrielles dans lesquelles on souhaite minimiser le temps de formation du gâteau, par exemple si l'on souhaite que le temps de formation du gâteau soit inférieur à 2 minutes.

Par exemple, il est possible de mettre en oeuvre le procédé de filtration selon l'invention, en limitant la première étape à 15 secondes, la seconde étape à 90 secondes, la troisième étape à 5 secondes, et la quatrième étape à 10 secondes.

Un avantage du filtre rotatif 10 selon l'invention est qu'il facilite les opérations de maintenance. Par exemple, en démontant le couvercle 30, il est possible d'avoir accès à l'intérieur de la cuve 18 et il est relativement facile de démonter l'arbre principal 16 ou les disques 14 pour remplacer les média filtrants 62. De même, la trappe d'accès 42 aménagée dans le couvercle 30, permet un accès facile au dispositif d'aspersion 32 pour son nettoyage et pour déboucher les perçages 40 qui pourraient s'encrasser du fait de la recirculation des boues.

Selon une variante de réalisation, le dispositif d'aspersion 32 décrit précédemment peut être remplacé par un dispositif à rampes munies de plusieurs buses d'aspersion réparties au-dessus des disques 14.

Bien entendu, l'invention s'applique aussi à un filtre rotatif 10 fonctionnant sous vide, où la phase liquide de la suspension est aspirée à travers les secteurs filtrants 50 et à travers les conduites 56, 58 de l'arbre principal 16.

Selon une variante de réalisation (non représentée), les dents de peigne 102 peuvent être montées mobiles sur l'auge 12 entre une position active, telle que représentée sur les figures 2 à 4, où ils sont en contact étanche avec les secteurs non-filtrants 54, et une position escamotée, dans laquelle ils ne sont plus en contact avec les secteurs non-filtrants 54. Dans ce cas, il est possible de supprimer les membranes 76, 77 et les dents de peigne 102 sont commandées en position escamotée lors de la troisième et de la quatrième étape pour permettre la rotation des disques 14.

### LEGENDE

- 10 :: filtre rotatif
- 12 :: auge
- 14 :: disques
- 16 :: arbre principal
- 18 :: cuve
- 20 :: conduite d'alimentation
- 22 :: paroi cylindrique principale
- 24 :: extrémité axiale inférieure
- 26 :: trémie
- 28 :: extrémité axiale supérieure
- 30 :: couvercle
- 32 :: dispositif d'aspersion
- 34 :: calotte sphérique
- 36 :: paroi tronconique
- 38 :: chambre supérieure
- 40 :: perçages
- 42 :: trappe d'accès
- 44 :: orifice d'alimentation
- 46 :: joues
- 48 :: bonde
- 50 :: secteurs filtrants
- 52 :: zones non-filtrantes
- 54 :: secteurs non-filtrants
- 56 :: première conduite
- 58 :: seconde conduite
- 60 :: éléments de structures
- 62 :: média filtrants
- 64 :: conduits
- 66 :: orifices de raccordement
- 68 :: corps principaux pleins
- 70 :: trous traversants
- 72, 73 :: faces principales
- 74, 75 :: joints d'étanchéité
- 76, 77 :: membranes
- 78 :: bords périphériques
- 80 :: brides de fixation
- 82 :: parties escamotables
- 84 :: parois principales mobiles
- 86 :: portions de liaison
- 88 :: rebords incurvés concaves
- 90 :: conduites d'arrivées
- 92 :: canaux
- 94 :: embases
- 96 :: pions
- 98 :: tubulures de raccordement
- 100 :: cavités
- 102 :: dents de peigne
- 104 :: rebords longitudinaux
- 106 :: pieds d'appuis
- 108 :: baguettes
- 110 :: extrémités libres
- 112 :: plaquettes de rigidification
- 114 :: surfaces supérieures
- 116 :: paroi de séparation
- 118 :: dispositif d'entraînement
- 120, 121 :: parois latérales
- 122 :: première vanne aval
- 124 :: seconde vanne aval
- A1 :: axe longitudinal
- A2 :: axe vertical
- D1 :: première série de dents de peigne
- D2 :: seconde série de dents de peigne
- J1 :: jets de dérochage
- S1 :: premières séries de secteurs filtrants
- S2 :: secondes séries de secteurs filtrants

## Revendications

1. Filtre rotatif (10) prévu pour la séparation liquide/solide d'une suspension, comportant une auge (12) contenant la suspension, un dispositif d'aspersion (32) de fluide de dérochage et au moins un disque (14) solidaire en rotation d'un arbre principal (16), chaque disque (14) étant immergé en partie dans la suspension et chaque disque (14) comportant plusieurs secteurs filtrants (50), chaque secteur filtrant (50) comprenant un élément de structure (60) recouvert d'un média filtrant (62) et un conduit (64) pour le raccordement dudit secteur filtrant (50) à une conduite (56, 58) aménagée le long de l'arbre principal (16), **caractérisé en ce que** :
- chaque disque (14) comporte une première série (S1) d'au moins un secteur filtrant (50) qui est séparée d'une seconde série (S2) d'au moins un secteur filtrant (50) par deux zones non-filtrantes (54),
- l'arbre principal (16) comporte une première conduite (56) qui communique avec la première série (S1) d'au moins un secteur filtrant (50) de chaque disque (14) et une seconde conduite (58) qui communique avec la seconde série (S2) d'au moins un secteur filtrant (50) de chaque disque (14),
- ledit filtre rotatif (10) comporte des dents de peigne (102) agencées au-dessus du niveau de la suspension, de part et d'autre de chaque disque (14),
- l'arbre principal (16) est prévu pour occuper au moins :
-- une première position angulaire (P1) dans laquelle la première série (S1) d'au moins un secteur filtrant (50) de chaque disque (14) se trouve sous les dents de peigne (102), baignant dans la suspension à filtrer, et dans laquelle la seconde série (S2) d'au moins un secteur filtrant (50) de chaque disque (14) se trouve au-dessus des dents de peigne (102), chaque zone non-filtrante (52) étant adjacente à une dent de peigne (102) sur chacune de ses faces,
-- une seconde position angulaire (P2) dans laquelle la seconde série (S2) d'au moins un secteur filtrant (50) de chaque disque (14) se trouve sous les dents de peigne (102), baignant dans la suspension à filtrer, et dans laquelle la première série (S1) d'au moins un secteur filtrant (50) de chaque disque (14) se trouve au-dessus des dents de peigne (102), chaque zone non-filtrante (52) étant adjacente à une dent de peigne (102) sur chacune de ses faces,
de manière à permettre le dérochage de la série (S1, S2) d'au moins un secteur filtrant (50) de chaque disque (14) située au-dessus des dents de peigne (102) pendant que la filtration de la suspension continue sur l'autre série (S1, S2) d'au moins un secteur filtrant (50) de chaque disque (14) située sous les dents de peigne (102).

2. Filtre rotatif (10) selon la revendication précédente, **caractérisé en ce qu'**il comporte au moins un joint d'étanchéité (74, 75) agencé entre chaque zone non-filtrante (52) et la dent de peigne (102) adjacente, lorsque l'arbre principal (16) occupe la première position angulaire (P1) et lorsque l'arbre principal (16) occupe la seconde position angulaire (P2).

3. Filtre rotatif (10) selon la revendication précédente, **caractérisé en ce que** chaque joint d'étanchéité (74, 75) comporte une partie escamotable (82) qui est commandée entre un état déployé dans lequel elle établit un contact étanche entre la zone non-filtrante (52) et la dent de peigne (102) adjacente, et un état escamoté dans lequel il n'y a plus de contact étanche entre la zone non-filtrante (52) et la dent de peigne (102) adjacente.

4. Filtre rotatif (10) selon la revendication précédente, **caractérisé en ce que** chaque joint d'étanchéité (74, 75) comporte au moins une partie déformable élastiquement.

5. Filtre rotatif (10) selon la revendication 3 ou 4, **caractérisé en ce que** chaque joint d'étanchéité (74, 75) est agencé sur la zone non-filtrante (52).

6. Filtre rotatif (10) selon la revendication précédente, **caractérisé en ce que** chaque zone non-filtrante (52) comporte un secteur de disque, dit secteur non-filtrant (54), interposé entre un secteur filtrant (50) de la première série (S1) et un secteur filtrant (50) de la seconde série (S2).

7. Filtre rotatif (10) selon la revendication précédente, **caractérisé en ce que** chaque secteur non-filtrant (54) comporte au moins une conduite d'arrivée (90) de fluide sous pression qui est raccordée à un canal (92) d'alimentation aménagé le long de l'arbre principal (16) de manière à permettre le déploiement de chaque joint d'étanchéité (74, 75) par gonflement et l'escamotage de chaque joint d'étanchéité (74, 75) par dégonflement.

8. Filtre rotatif (10) selon la revendication 6 ou 7, **caractérisé en ce que** chaque joint d'étanchéité (74, 75) est une membrane (76, 77) qui est fixée sur un secteur non-filtrant (54) par ses bords périphériques (78) et qui comporte une paroi principale mobile (84) qui est reliée aux bords périphériques (78) par une portion de liaison (86) en forme de soufflet.

9. Filtre rotatif (10) selon l'une quelconque des revendications précédentes, **caractérisé en ce que** les dents de peigne (102) sont fixées sur les bords de l'auge (12).

10. Filtre rotatif (10) selon l'une quelconque des revendications précédentes, **caractérisé en ce que** chaque dent de peigne (102) est inclinée vers le bas depuis l'arbre principal (16) vers l'extérieur, de manière à faciliter l'écoulement vers l'extérieur de l'auge (12) des boues constituées par le mélange du fluide utilisé pendant le dérochage et des gâteaux de filtration débâtis des secteurs filtrants (50).

11. Filtre rotatif (10) selon l'une quelconque des revendications précédentes, **caractérisé en ce que** l'arbre principal (16) est équipé d'une première vanne aval (122) permettant de fermer la première conduite (56) lorsque la première série (S1) d'au moins un secteur filtrant (50) de chaque disque (14) subit une opération de dérochage, et d'une seconde vanne aval (124) permettant de fermer la seconde conduite (58) lorsque la seconde série (S2) d'au moins un secteur filtrant (50) de chaque disque (14) subit une opération de dérochage.

12. Filtre rotatif (10) selon l'une quelconque des revendications précédentes, **caractérisé en ce qu'**il comporte plusieurs disques (14).

13. Filtre rotatif (10) selon l'une quelconque des revendications précédentes, **caractérisé en ce que** l'auge (12) est agencée à l'intérieur d'une cuve (18) qui comporte une trémie (26) agencée sous l'auge (12) pour récupérer les boues issues du dérochage.

14. Filtre rotatif (10) selon l'une quelconque des revendications précédentes, **caractérisé en ce que** le dispositif d'aspersion (32) pour le dérochage comporte une chambre supérieure (38) munie d'au moins un orifice d'alimentation (44) en fluide de dérochage et comporte une série de perçages (40) positionnée au-dessus du ou des disques (14) de manière que la mise sous pression du fluide de dérochage dans la chambre supérieure (38) provoque des jets de dérochage (J1) vers les faces principales des secteurs filtrants (50).

15. Procédé de filtration pour la séparation liquide/solide d'une suspension au moyen d'un filtre rotatif (10) comportant une auge (12) contenant la suspension, un dispositif d'aspersion de fluide de dérochage et au moins un disque (14) solidaire en rotation d'un arbre principal (16), chaque disque (14) étant immergé en partie dans la suspension et chaque disque (14) comportant plusieurs secteurs filtrants (50), chaque secteur filtrant (50) comprenant un élément de structure (60) recouvert d'un média filtrant (62) et un conduit (64) pour son raccordement à une conduite (56, 58) aménagée le long de l'arbre principal (16), le procédé comportant les opérations suivantes :
a) filtration de la suspension sur chaque disque (14) au moyen d'une première ou d'une seconde série (S1, S2) d'au moins un secteur filtrant (50),
b) dérochage sur chaque disque (14) d'une première ou d'une seconde série (S1, S2) d'au moins un secteur filtrant (50) par aspersion avec un fluide de dérochage,
le procédé étant **caractérisé en ce qu'**il comprend un cycle de fonctionnement nominal au cours duquel :
- l'opération de filtration de la première série (S1) d'au moins un secteur filtrant (50) de chaque disque (14) est réalisée simultanément avec l'opération de dérochage de la seconde série (S2) d'au moins un secteur filtrant (50) de chaque disque (14), l'arbre principal (16) étant commandé dans une première position angulaire (P1) où la première série (S1) d'au moins un secteur filtrant (50) de chaque disque (14) baigne dans la suspension et où la seconde série (S2) d'au moins un secteur filtrant (50) de chaque disque (14) est agencée au-dessus de la suspension, et
- l'opération de filtration de la seconde série (S2) d'au moins un secteur filtrant (50) de chaque disque (14) est réalisée simultanément avec l'opération de dérochage de la première série (S1) d'au moins un secteur filtrant (50) de chaque disque (14), l'arbre principal (16) étant commandé dans une seconde position angulaire (P2) où la seconde série (S2) d'au moins un secteur filtrant (50) de chaque disque (14) baigne dans la suspension et où la première série (S1) d'au moins un secteur filtrant (50) de chaque disque (14) est agencée au-dessus de la suspension.

16. Procédé de filtration selon la revendication précédente, **caractérisé en ce que** l'arbre principal (16) comporte une première conduite (56) qui communique avec la première série (S1) d'au moins un secteur filtrant (50) de chaque disque (14) et une seconde conduite (58), distincte de la première conduite (56), qui communique avec la seconde série (S2) d'au moins un secteur filtrant (50) de chaque disque (14), et **en ce que**, pendant l'opération de dérochage de la première série (S1) d'au moins un secteur filtrant (50) de chaque disque (14), la première conduite (56) est fermée, et pendant l'opération de dérochage de la seconde série (S2) d'au moins un secteur filtrant (50) de chaque disque (14), la seconde conduite (58) est fermée.

17. Procédé de filtration selon la revendication 15 ou 16, **caractérisé en ce que** chaque opération de dérochage est précédée par une étape de mise en étanchéité au cours de laquelle un contact étanche est établi entre chaque disque (14) et des dents de peigne (102), et **en ce que** chaque opération de dérochage est suivie par une étape de suppression de l'étanchéité au cours de laquelle le contact étanche est supprimé.

18. Procédé de filtration selon la revendication précédente, **caractérisé en ce que** l'étape de mise en étanchéité consiste à commander les parties escamotables (82) de joints d'étanchéité (74, 75) dans un état déployé où elles assurent le contact étanche, et l'étape de suppression de l'étanchéité consiste à commander lesdites parties escamotables (82) dans un état escamoté où elles assurent la suppression dudit contact étanche.

19. Procédé de filtration selon la revendication précédente, **caractérisé en ce que** les joints d'étanchéité (74, 75) sont déployés par gonflement résultant de la mise en pression d'un circuit de fluide alimentant au moins deux secteurs non-filtrant (54) par disque (14) agencés entre les deux séries (S1, S2) d'au moins un secteur filtrant (50) de chaque disque (14), à travers un canal (92) d'alimentation aménagé le long de l'arbre principal (16), et lesdits joints d'étanchéités (74, 75) sont escamotés par dégonflement résultant de la baisse de pression dudit circuit de fluide.

20. Procédé de filtration selon l'une quelconque des revendications 15 à 19, **caractérisé en ce que**, au cours du cycle nominal, l'arbre principal (16) est commandé alternativement en pivotement de 180 degrés dans le sens horaire puis anti-horaire entre la première position angulaire (P1) et la seconde position angulaire (P2).

21. Procédé de filtration selon l'une quelconque des revendications 15 à 20, **caractérisé en ce que** les boues issues des opérations de dérochage sont réinjectées en partie dans le circuit d'alimentation du dispositif d'aspersion (32) des disques (14) au cours des opérations de dérochage.

## Patentansprüche

1. Drehfilter (10), das für die Abtrennung Flüssigkeit/Feststoff einer Suspension vorgesehen ist, das einen Trog (12), der die Suspension enthält, eine Sprühvorrichtung (32) für ein Abbeizfluid und mindestens eine Scheibe (14) aufweist, die mit einer Hauptwelle (16) drehfest verbunden ist, wobei jede Scheibe (14) teilweise in die Suspension eingetaucht ist und jede Scheibe (14) mehrere Filtersektoren (50) umfasst, jeder Filtersektor (50) umfassend ein Strukturelement (60), das mit einem Filtermedium (62) bedeckt ist, und eine Leitung (64) für den Anschluss des Filtersektors (50) an eine Leitung (56, 58), die entlang der Hauptwelle (16) eingerichtet ist, **dadurch gekennzeichnet, dass:**
- jede Scheibe (14) eine erste Reihe (S1) von mindestens einem Filtersektor (50) aufweist, die von einer zweiten Reihe (S2) von mindestens einem Filtersektor (50) durch zwei nicht filternde Bereiche (54) abgetrennt ist,
- die Hauptwelle (16) eine erste Leitung (56), die mit der ersten Reihe (S1) von mindestens einem Filtersektor (50) jeder Scheibe (14) in Verbindung steht, und eine zweite Leitung (58) aufweist, die mit der zweiten Reihe (S2) von mindestens einem Filtersektor (50) jeder Scheibe (14) in Verbindung steht,
- das Drehfilter (10) Zinken (102) aufweist, die oberhalb des Pegels der Suspension auf beiden Seiten jeder Scheibe (14) angeordnet sind,
- die Hauptwelle (16) dazu vorgesehen ist, mindestens einzunehmen:
-- eine erste Winkelposition (P1), in der die erste Reihe (S1) von mindestens einem Filtersektor (50) jeder Scheibe (14) unter den Zinken (102) liegt, umspült von der zu filternden Suspension, und in der die zweite Reihe (S2) von mindestens einem Filtersektor (50) jeder Scheibe (14) oberhalb der Zinken (102) liegt, wobei jeder nicht filternde Bereich (52) auf jeder seiner Flächen an eine Zinke (102) angrenzt,
-- eine zweite Winkelposition (P2), in der die zweite Reihe (S2) von mindestens einem Filtersektor (50) jeder Scheibe (14) unter den Zinken (102) liegt, umspült von der zu filternden Suspension, und in der die erste Reihe (S1) von mindestens einem Filtersektor (50) jeder Scheibe (14) oberhalb der Zinken (102) liegt, wobei jeder nicht filternde Bereich (52) auf jeder seiner Flächen an eine Zinke (102) angrenzt,
sodass das Abbeizen der Reihe (S1, S2) von mindestens einem Filtersektor (50) jeder Scheibe (14) ermöglicht wird, die sich oberhalb den Zinken (102) befindet, während die Filtration der Suspension an der anderen Reihe (S1, S2) von mindestens einem Filtersektor (50) jeder Scheibe (14) fortgesetzt wird, die sich unter den Zinken (102) befindet.

2. Drehfilter (10) nach dem vorstehenden Anspruch,
**dadurch gekennzeichnet, dass** es mindestens eine Dichtung (74, 75) aufweist, die zwischen jedem nicht filternden Bereich (52) und der angrenzenden Zinke (102) angeordnet ist, wenn die Hauptwelle (16) die erste Winkelposition (P1) einnimmt und wenn die Hauptwelle (16) die zweite Winkelposition (P2) einnimmt.

3. Drehfilter (10) nach dem vorstehenden Anspruch,
**dadurch gekennzeichnet, dass** jede Dichtung (74, 75) einen einziehbaren Teil (82) aufweist, der zwischen einem entfalteten Zustand, in dem er einen dichtenden Kontakt zwischen dem nicht filternden Bereich (52) und der angrenzenden Zinke (102) herstellt, und einem eingezogenen Zustand gesteuert wird, in dem kein dichtender Kontakt mehr zwischen dem nicht filternden Bereich (52) und der angrenzenden Zinke (102) besteht.

4. Drehfilter (10) nach dem vorstehenden Anspruch,
**dadurch gekennzeichnet, dass** jede Dichtung (74, 75) mindestens einen elastisch verformbaren Teil aufweist.

5. Drehfilter (10) nach Anspruch 3 oder 4, **dadurch gekennzeichnet, dass** jede Dichtung (74, 75) auf dem nicht filternden Bereich (52) angeordnet ist.

6. Drehfilter (10) nach dem vorstehenden Anspruch,
**dadurch gekennzeichnet, dass** jeder nicht filternde Bereich (52) einen Scheibensektor, den sogenannten nicht filternden Sektor (54), aufweist, der zwischen einem Filtersektor (50) der ersten Reihe (S1) und einem Filtersektor (50) der zweiten Reihe (S2) eingefügt ist.

7. Drehfilter (10) nach dem vorstehenden Anspruch,
**dadurch gekennzeichnet, dass** jeder nicht filternde Sektor (54) mindestens eine Zuleitung (90) für Druckfluid aufweist, die an einen Versorgungskanal (92) angeschlossen ist, der entlang der Hauptwelle (16) so eingerichtet ist, dass das Entfalten jeder Dichtung (74, 75) durch Aufblasen und das Einziehen jeder Dichtung (74, 75) durch Entleeren ermöglicht wird.

8. Drehfilter (10) nach Anspruch 6 oder 7, **dadurch gekennzeichnet, dass** jede Dichtung (74, 75) eine Membran (76, 77) ist, die durch ihre Umfangskanten (78) an einem nicht filternden Sektor (54) befestigt ist, und die eine bewegbare Hauptwand (84) aufweist, die mit den Umfangskanten (78) durch einen balgförmigen Verbindungsabschnitt (86) verbunden ist.

9. Drehfilter (10) nach einem der vorstehenden Ansprüche,
**dadurch gekennzeichnet, dass** die Zinken (102) an den Kanten des Trogs (12) befestigt sind.

10. Drehfilter (10) nach einem der vorstehenden Ansprüche,
**dadurch gekennzeichnet, dass** jede Zinke (102) von der Hauptwelle (16) nach unten zu der Außenseite hin geneigt ist, um die Strömung des Schlamms, der aus der Mischung des Fluids, das während des Abbeizens verwendet wird, und von Filterkuchen besteht, die aus den Filtersektoren (50) herausgezogen werden, zu der Außenseite des Trogs (12) hin zu erleichtern.

11. Drehfilter (10) nach einem der vorstehenden Ansprüche,
**dadurch gekennzeichnet, dass** die Hauptwelle (16) mit einem ersten stromabwärtigen Ventil (122), das es ermöglicht, die erste Leitung (56) zu schließen, wenn die erste Reihe (S1) von mindestens einem Filtersektor (50) jeder Scheibe (14) einem Abbeizvorgang unterzogen wird, und einem zweiten stromabwärtigen Ventil (124) ausgestattet ist, das es ermöglicht, die zweite Leitung (58) zu schließen, wenn die zweite Reihe (S2) von mindestens einem Filtersektor (50) jeder Scheibe (14) einem Abbeizvorgang unterzogen wird.

12. Drehfilter (10) nach einem der vorstehenden Ansprüche,
**dadurch gekennzeichnet, dass** es mehrere Scheiben (14) aufweist.

13. Drehfilter (10) nach einem der vorstehenden Ansprüche,
**dadurch gekennzeichnet, dass** der Trog (12) im Inneren eines Behälters (18) angeordnet ist, der einen Trichter (26) aufweist, der unter dem Trog (12) zum Abfangen des Schlamms angeordnet ist, der von dem Abbeizen stammt.

14. Drehfilter (10) nach einem der vorstehenden Ansprüche,
**dadurch gekennzeichnet, dass** die Sprühvorrichtung (32) für das Abbeizen eine obere Kammer (38) aufweist, die mit mindestens einer Versorgungsöffnung (44) für das Abbeizfluid versehen ist, und eine Reihe von Bohrungen (40) aufweist, die oberhalb der Scheibe(n) (14) so positioniert sind, dass die Druckbeaufschlagung des Abbeizfluids in der oberen Kammer (38) Abbeizstrahlen (J1) zu den Hauptflächen der Filtersektoren (50) hin bewirkt.

15. Filterverfahren für die Abtrennung Flüssigkeit/ Feststoff einer Suspension mittels eines Drehfilters (10), das einen Trog (12), der die Suspension enthält, eine Sprühvorrichtung für das Abbeizfluid und mindestens eine Scheibe (14) aufweist, die mit einer Hauptwelle (16) drehfest verbunden ist, umfasst, wobei jede Scheibe (14) teilweise in die Suspension eingetaucht ist und jede Scheibe (14) mehrere Filtersektoren (50) aufweist, jeder Filtersektor (50) umfassend ein Strukturelement (60), das mit einem Filtermedium (62) bedeckt ist, und eine Leitung (64) für seinen Anschluss an eine Leitung (56, 58), die entlang der Hauptwelle (16) eingerichtet ist, wobei das Verfahren die folgenden Vorgänge aufweist:
a) Filtern der Suspension auf jeder Scheibe (14) mittels einer ersten oder einer zweiten Reihe (S1, S2) von mindestens einem Filtersektor (50),
b) Abbeizen auf jeder Scheibe (14) einer ersten oder einer zweiten Reihe (S1, S2) von mindestens einem Filtersektor (50) durch Besprühen mit einem Abbeizfluid,
wobei das Verfahren **dadurch gekennzeichnet ist, dass** es einen nominalen Betriebszyklus umfasst, im Laufe dessen:
- der Vorgang des Filterns der ersten Reihe (S1) von mindestens einem Filtersektor (50) jeder Scheibe (14) gleichzeitig mit dem Vorgang des Abbeizens der zweiten Reihe (S2) von mindestens einem Filtersektor (50) jeder Scheibe (14) durchgeführt wird, wobei die Hauptwelle (16) in eine erste Winkelposition (P1) gesteuert wird, in der die erste Reihe (S1) von mindestens einem Filtersektor (50) jeder Scheibe (14) von der Suspension umspült ist und in der die zweite Reihe (S2) von mindestens einem Filtersektor (50) jeder Scheibe (14) oberhalb der Suspension angeordnet ist, und
- der Vorgang des Filterns der zweiten Reihe (S2) von mindestens einem Filtersektor (50) jeder Scheibe (14) gleichzeitig mit dem Vorgang des Abbeizens der ersten Reihe (S1) von mindestens einem Filtersektor (50) jeder Scheibe (14) durchgeführt wird, wobei die Hauptwelle (16) in eine zweite Winkelposition (P2) gesteuert wird, in der die zweite Reihe (S2) von mindestens einem Filtersektor (50) jeder Scheibe (14) von der Suspension umspült ist, und in der die erste Reihe (S1) von mindestens einem Filtersektor (50) jeder Scheibe (14) oberhalb der Suspension angeordnet ist.

16. Filterverfahren nach dem vorstehenden Anspruch,
**dadurch gekennzeichnet, dass** die Hauptwelle (16) eine erste Leitung (56), die mit der ersten Reihe (S1) von mindestens einem Filtersektor (50) jeder Scheibe (14) in Verbindung steht, und eine zweite Leitung (58) aufweist, die von der ersten Leitung (56) verschieden ist, die mit der zweiten Reihe (S2) von mindestens einem Filtersektor (50) jeder Scheibe (14) in Verbindung steht, und dass während des Vorgangs des Abbeizens der ersten Reihe (S1) von mindestens einem Filtersektor (50) jeder Scheibe (14) die erste Leitung (56) geschlossen ist, und während des Vorgangs des Abbeizens der zweiten Reihe (S2) von mindestens einem Filtersektor (50) jeder Scheibe (14) die zweite Leitung (58) geschlossen ist.

17. Filterverfahren nach Anspruch 15 oder 16, **dadurch gekennzeichnet, dass** jedem Abbeizvorgang ein Abdichtungsschritt vorausgeht, im Laufe dessen ein dichter Kontakt zwischen jeder Scheibe (14) und den Zinken (102) hergestellt wird, und dass jedem Abbeizvorgang ein Abdichtungsaufhebungsschritt folgt, im Laufe dessen der dichte Kontakt aufgehoben wird.

18. Filterverfahren nach dem vorstehenden Anspruch,
**dadurch gekennzeichnet, dass** der Schritt des Abdichtens darin besteht, die einziehbaren Teile (82) von Dichtungen (74, 75) in einen entfalteten Zustand zu steuern, in dem sie den dichten Kontakt sicherstellen, und der Schritt des Aufhebens der Abdichtung darin besteht, die einziehbaren Teile (82) in einen eingezogenen Zustand zu steuern, in dem sie das Aufheben des dichten Kontakts sicherstellen.

19. Filterverfahren nach dem vorstehenden Anspruch,
**dadurch gekennzeichnet, dass** die Dichtungen (74, 75) durch ein Aufblasen entfaltet werden, das sich aus der Druckbeaufschlagung eines Fluidkreislaufs ergibt, der mindestens zwei nicht filternde Sektoren (54) pro Scheibe (14) versorgt, die zwischen den zwei Reihen (S1, S2) von mindestens einem Filtersektor (50) jeder Scheibe (14) durch einen Versorgungskanal (92) angeordnet sind, der entlang der Hauptwelle (16) eingerichtet ist, und die Dichtungen (74, 75) durch ein Entleeren eingezogen werden, das sich aus dem Druckabfall des Fluidkreislaufs ergibt.

20. Filterverfahren nach einem der Ansprüche 15 bis 19,
**dadurch gekennzeichnet, dass** die Hauptwelle (16) während des nominalen Zyklus abwechselnd so gesteuert wird, dass sie zwischen der ersten Winkelposition (P1) und der zweiten Winkelposition (P2) um 180 Grad im Uhrzeigersinn, dann im Gegenuhrzeigersinn geschwenkt wird.

21. Filterverfahren nach einem der Ansprüche 15 bis 20,
**dadurch gekennzeichnet, dass** der Schlamm, der aus den Abbeizvorgängen stammt, im Laufe der Abbeizvorgänge teilweise wieder in den Versorgungskreislauf der Sprühvorrichtung (32) der Scheiben (14) eingespritzt wird.

## Claims

1. Rotary filter (10) intended for liquid/solid separation of a suspension, comprising a trough (12) containing the suspension, a device (32) for spraying disengagement fluid, and at least one disk (14) which is non-rotatably connected to a main shaft (16), each disk (14) being partially immersed in the suspension and each disk (14) comprising a plurality of filter sectors (50), each filter sector (50) comprising a structural element (60) that is covered by a filter medium (62), and a duct (64) for connection of said filter sector (50) to a pipe (56, 58) arranged along the main shaft (16), **characterized in that**:
- each disk (14) comprises a first series (S1) of at least one filter sector (50) which is separated from a second series (S2) of at least one filter sector (50) by means of two non-filtering zones (54),
- the main shaft (16) comprises a first pipe (56) which communicates with the first series (S1) of at least one filter sector (50) of each disk (14), and a second pipe (58) which communicates with the second series (S2) of at least one filter sector (50) of each disk (14),
- said rotary filter (10) comprises comb teeth (102) which are arranged above the level of the suspension, on either side of each disk (14),
- the main shaft (16) is intended to occupy at least:
-- a first angular position (P1) in which the first series (S1) of at least one filter sector (50) of each disk (14) is located under the comb teeth (102), soaking in the suspension to be filtered, and in which the second series (S2) of at least one filter sector (50) of each disk (14) is located above the comb teeth (102), each non-filtering zone (52) being adjacent to one comb tooth (102) on each of the faces thereof,
-- a second angular position (P2) in which the second series (S2) of at least one filter sector (50) of each disk (14) is located under the comb teeth (102), soaking in the suspension to be filtered, and in which the first series (S1) of at least one filter sector (50) of each disk (14) is located above the comb teeth (102), each non-filtering zone (52) being adjacent to one comb tooth (102) on each of the faces thereof,
so as to allow for the disengagement of the series (S1, S2) of at least one filter sector (50) of each disk (14) located above the comb teeth (102) while the filtration of the suspension continues on the other series (S1, S2) of at least one filter sector (50) of each disk (14) located below the comb teeth (102).

2. Rotary filter (10) according to the preceding claim, **characterized in that** it comprises at least one seal (74, 75) which is arranged between each non-filtering zone (52) and the adjacent comb tooth (102), when the main shaft (16) occupies the first angular position (P1) and when the main shaft (16) occupies the second angular position (P2).

3. Rotary filter (10) according to the preceding claim, **characterized in that** each seal (74, 75) comprises a retractable part (82) which is controlled between a deployed state in which it establishes sealing contact between the non-filtering zone (52) and the adjacent comb tooth (102), and a retracted state in which there is no longer sealing contact between the non-filtering zone (52) and the adjacent comb tooth (102).

4. Rotary filter (10) according to the preceding claim, **characterized in that** each seal (74, 75) comprises at least one resiliently deformable part.

5. Rotary filter (10) according to either claim 3 or claim 4, **characterized in that** each seal (74, 75) is arranged on the non-filtering zone (52).

6. Rotary filter (10) according to the preceding claim, **characterized in that** each non-filtering zone (52) comprises a disk sector, referred to as a non-filtering sector (54), which is interposed between a filter sector (50) of the first series (51) and a filter sector (50) of the second series (S2).

7. Rotary filter (10) according to the preceding claim, **characterized in that** each non-filtering sector (54) comprises at least one inlet pipe (90) for pressurized fluid which is connected to a feed channel (92) which is arranged along the main shaft (16) so as to allow for the deployment of each seal (74, 75) by means of inflation, and the retraction of each seal (74, 75) by deflation.

8. Rotary filter (10) according to either claim 6 or claim 7, **characterized in that** each seal (74, 75) is a diaphragm (76, 77) which is fixed to a non-filtering sector (54) by the peripheral edges (78) thereof and which comprises a movable main wall (84) which is connected to the peripheral edges (78) by a connecting portion (86) in the form of a gusset.

9. Rotary filter (10) according to any of the preceding claims, **characterized in that** the comb teeth (102) are fixed to the edges of the trough (12).

10. Rotary filter (10) according to any of the preceding claims, **characterized in that** each comb tooth (102) is inclined downwards from the main shaft (16) towards the outside, so as to facilitate the flow, towards the outside of the trough (12), of sludges made up of the mixture of fluid used during the disengagement of the filter cakes removed from the filter sectors (50).

11. Rotary filter (10) according to any of the preceding claims, **characterized in that** the main shaft (16) is equipped with a first downstream valve (122) which makes it possible to close the first pipe (56) when the first series (S1) of at least one filter sector (50) of each disk (14) undergoes a disengagement operation, and a second downstream valve (124) which makes it possible to close the second pipe (58) when the second series (S2) of at least one filter sector (50) of each disk (14) undergoes a disengagement operation.

12. Rotary filter (10) according to any of the preceding claims, **characterized in that** it comprises a plurality of disks (14).

13. Rotary filter (10) according to any of the preceding claims, **characterized in that** the trough (12) is engaged inside a tank (18) which comprises a hopper (26) which is arranged under the trough (12) to recover the sludges originating from the disengagement.

14. Rotary filter (10) according to any of the preceding claims, **characterized in that** the spraying device (32) for the disengagement comprises an upper chamber (38) provided with at least one feed opening (44) for disengagement fluid, and comprises a series of piercings (40) which are positioned above the disk or disks (14) such that the pressurization of the disengagement fluid in the upper chamber (38) causes disengagement jets (J1) towards the main faces of the filter sectors (50).

15. Filtration method for liquid/solid separation of a suspension by means of a rotary filter (10) comprising a trough (12) containing the suspension, a device for spraying disengagement fluid, and at least one disk (14) which is non-rotatably connected to a main shaft (16), each disk (14) being partially immersed in the suspension and each disk (14) comprising a plurality of filter sectors (50), each filter sector (50) comprising a structural element (60) that is covered by a filter medium (62), and a duct (64) for connection thereof to a pipe (56, 58) arranged along the main shaft (16), the method comprising the following operations:
a) filtration of the suspension on each disk (14) by means of a first or a second series (S1, S2) of at least one filter sector (50),
b) disengagement, on each disk (14), of a first or a second series (S1, S2) of at least one filter sector (50) by spraying with a disengagement fluid,
the method being **characterized in that** it comprises a nominal operation cycle during which:
- the operation of filtration of the first series (S1) of at least one filter sector (50) of each disk (14) is carried out simultaneously with the operation of disengagement of the second series (S2) of at least one filter sector (50) of each disk (14), the main shaft (16) being controlled into a first angular position (P1) where the first series (S1) of at least one filter sector (50) of each disk (14) soaks in the suspension and where the second series (S2) of at least one filter sector (50) of each disk (14) is arranged above the suspension, and
- the operation of filtration of the second series (S2) of at least one filter sector (50) of each disk (14) is carried out simultaneously with the operation of disengagement of the first series (S1) of at least one filter sector (50) of each disk (14), the main shaft (16) being controlled into a second angular position (P2) where the second series (S2) of at least one filter sector (50) of each disk (14) soaks in the suspension and where the first series (S1) of at least one filter sector (50) of each disk (14) is arranged above the suspension.

16. Filtration method according to the preceding claim, **characterized in that** the main shaft (16) comprises a first pipe (56) which communicates with the first series (S1) of at least one filter sector (50) of each disk (14), and a second pipe (58) which is separate from the first pipe (56) and communicates with the second series (S2) of at least one filter sector (50) of each disk (14), and **in that**, during the operation of disengagement of the first series (S1) of at least one filter sector (50) of each disk (14) the first pipe (56) is closed, and during the operation of disengagement of the second series (S2) of at least one filter sector (50) of each disk (14) the second pipe (58) is closed.

17. Filtration method according to either claim 15 or claim 16, **characterized in that** each disengagement operation is preceded by a step of sealing, during which sealing contact is established between each disk (14) and the comb teeth (102), and **in that** each disengagement operation is followed by a step of stopping the sealing, during which the sealing contact is stopped.

18. Filtration method according to the preceding claim, **characterized in that** the step of sealing consists in controlling the retractable parts (82) of seals (74, 75) into a deployed state where they ensure the sealing contact, and the step of stopping the sealing consists in controlling said retractable parts (82) into a retracted state in which they ensure that said sealing contact is stopped.

19. Filtration method according to the preceding claim, **characterized in that** the seals (74, 75) are deployed by means of inflation, resulting from the pressurization of a fluid circuit which feeds at least two non-filtering sectors (54) per disk (14) arranged between the two series (S1, S2) of at least one filter sector (50) of each disk (14), through a feed channel (92) arranged along the main shaft (16), and said seals (74, 75) are retracted by means of deflation, resulting from the drop of pressure of said fluid circuit.

20. Filtration method according to any of claims 15 to 19, **characterized in that**, during the nominal cycle, the main shaft (16) is controlled alternately so as to pivot 180 degrees in the clockwise and then the anticlockwise direction between the first angular position (P1) and the second angular position (P2).

21. Filtration method according to any of claims 15 to 20, **characterized in that** the sludges originating from the disengagement operations are reinjected, in part, into the feed circuit of the device (32) for spraying the disks (14) during the disengagement operations.
